# EUROPÄISCHE PATENTSCHRIFT

(11) **EP 3 968 107 B1**
(45) Veröffentlichungstag und Bekanntmachung des Hinweises auf die Patenterteilung: **14.12.2022**
(21) Anmeldenummer: 20195292.6
(22) Anmeldetag: 09.09.2020
(51) Int. Cl.: G05B 19/042, G05B 23/02

(54) **PROZESSÜBERWACHUNGSSYSTEM UND VERFAHREN ZUM BETRIEB EINES PROZESSÜBERWACHUNGSSYSTEMS**
PROCESS MONITORING SYSTEM AND METHOD FOR OPERATING SAME
SYSTÈME DE SURVEILLANCE DE PROCESSUS ET PROCÉDÉ DE FONCTIONNEMENT D'UN SYSTÈME DE SURVEILLANCE DE PROCESSUS

(43) Veröffentlichungstag der Anmeldung: 16.03.2022
(73) Patentinhaber: Siemens Aktiengesellschaft, 80333 München (DE)
(72) Erfinder: Lutz, Benjamin, 76327 Pfinztal (DE)

(56) Entgegenhaltungen:
- EP-A1- 3 264 208
- EP-A1- 3 480 672
- EP-B1- 3 264 208
- WO-A1-2017/215885

## Beschreibung

Zur automatisierten Steuerung und Überwachung von Prozessen und Anlagen werden nach dem Stand der Technik sogenannte Supervisory Control and Data Acquisition (SCADA)-Systeme eingesetzt. Darunter versteht man Überwachungs- und Steuerungssystem, welche die Überwachung, Steuerung und Visualisierung von industriellen Prozessen ermöglichen. Bestandteile dieser Steuerungssysteme sind u.a. Hardwarekomponenten, wie Sensoren, PLCs oder Technologiebaugruppen zur Messung und Übertragung von Prozesswerten und andererseits Softwarekomponenten, wie beispielsweise ein Simatic WinCC der Firma Siemens AG. Ein derartiges System weist mehrere Benutzerschnittstellen, ein Alarmmanagement, eine Datenarchivierung und eine Prozessvisualisierung auf.

In der WO 2017/215885 A1 wird ein derartiges System und Verfahren zum Betrieb offenbart.

Eine der wesentlichen Voraussetzungen für die erfolgreiche Umsetzung der zukünftigen Digitalisierungsvorhaben besteht in der zunehmenden Ersetzung von heute etablierten manuellen Aktionen, die durch Menschen meist intuitiv, basierend auf Erfahrungswerten vorgenommen werden, durch automatisierte und digitalisierte Abfolgen. Derartige Abläufe werden deterministisch, effizient möglichst gut nachvollziehbar gestaltet und ermöglichen darüber hinaus eine Rückverfolgbarkeit. Um eine manuelle Aktion handelt es sich im Sinne der Erfindung z.B. wenn ein Operator für die nachfolgende Schicht einen Klebezettel (Post-it) mit Notizen hinterlässt, wie z.B. eine Übersicht der vom Operator ermittelten oder hervorgerufenen Aktionen oder Ursachen für bestimmte Störungen/Anomalien oder ausstehende noch vorzunehmende Handlungen und somit die vom Nachfolger zu beachtenden Anweisungen beinhaltet.

Ein zum Teil digitalisiertes Analogum zu den Notiz-Zetteln wird durch die in Prozessleitsystemen, wie WinCC oder PC7 der Firma Siemens, integrierte Memo-Funktion repräsentiert. Mit Hilfe dieser Funktion können die Operatoren - genauso wie bei der Verwendung von Post-it's - einander wichtige Notizen, Informationen oder Kurznachrichten hinterlassen.

Nachteilig an den bekannten Memos, welches in der Regel an Prozessobjekten gebunden sind, ist es, dass gegenwärtig nur in einer Ansicht (Face Plates), wobei die Ansicht wiederum eine Memo-Ansicht enthält, erstellt werden können und auch wieder gelesen werden können. Über eine sogenannte "Active Memo" Option kann festgestellt werden, ob das Memo noch berücksichtigt oder erledigt werden kann oder bereits erledigt ist. Da oftmals für den Betrieb der Anlage essenziell wichtige Handlungen in Memos hinterlegt werden, wie beispielsweise das ein Ventil zu einer bestimmten Uhrzeit wieder geschlossen werden muss, dürfen diese auf keinen Fall übersehen oder verspätet berücksichtigt werden. Wenn ein Operator im Rahmen seiner Routinearbeiten nicht kontinuierlich über anstehende und zu bearbeitende und zu berücksichtigende Anweisungen informiert wird, kann dies mit fatalen Folgen einhergehen, weil z.B. ein Ventil zu einer bestimmten Uhrzeit nicht geschlossen wurde.

Es ist daher die Aufgabe der Erfindung ein Verfahren und ein System bereitzustellen, welches die Sicherheit eines Prozessüberwachungssystems verbessert, insbesondere für die Abläufe, welcher ein Operator anhand von manuellen Aktionen durchführt.

Bei einem Prozessüberwachungssystem mit zumindest einer ersten Bedieneinheit, welche mit einem Server in Verbindung steht, und der Server weist zur Überwachung einer Automatisierungsanlage einen Visualisierungsservice auf, welcher mit einem Variablenhaushalt für Prozesswerte aus einen Prozessabbild ausgestaltet ist, weiterhin ausgestaltet mit einem Alarmhaushalt und einer Alarmliste mit Alarmmeldungen, und der Visualisierungsservice ausgestaltet ist, die zumindest erste Bedieneinheit mit Prozesswerten und Alarmmeldungen zu versorgen, wobei die erste Bedieneinheit ausgestaltet ist, in einem Ein-Ausgabefenster ein Prozessobjekt mit seinem Prozesswerten anzuzeigen, weiterhin ist die erste Bedieneinheit ausgestaltet, eine Meldefolgeanzeige mit Alarmmeldungen aus der Alarmliste anzuzeigen, wird die eingangs genannte Aufgabe dadurch gelöst, dass das Ein-Ausgabefenster mit einem Eingabefeld für Kurznachrichten ausgestaltet ist und weiterhin ein Aktivierungsmittel aufweist, wobei eine Verwaltungskomponente zur Verwaltung der Prozessobjekte vorhanden ist und diese ausgestaltet ist, bei einer eingegebenen Kurznachricht und einen aktivierten Aktivierungsmittel für das dem Eingabefeld zugeordnete Prozessobjekt eine Alarm-Instanz anzulegen und die zugeordnete Kurznachricht als weitere Alarmmeldung in der Alarmliste zu hinterlegen, wobei die Meldefolgeanzeige dahingehend erweitert ist, die weiteren Alarmmeldungen aus der Alarmliste als Kurznachrichten anzuzeigen.

Als wesentlicher Vorteil der Erfindung wird angesehen, dass nun ein Operator beispielsweise auch an einer anderen Bedieneinheit über das bereits vorhandene Meldefolgesystem erkennen kann, ob es dringliche Kurznachrichten für ihn gibt oder ob für das zu bedienenden Prozessobjekt Anweisungen zu berücksichtigen sind. Über eine Alarmhistorie kann ebenfalls evaluiert werden, welche dringlichen Memos bzw. Kurznachrichten in der Vergangenheit durch welchen Operator und in welchem Zeitraum bearbeitet und abgeschlossen wurden.

Ein so realisiertes Zusammenspiel von Memos in ein bestehendes Alarmmanagement lässt eine Kurznachrichteneinbettung in ein bestehendes Alarmmanagement zu und sorgt für eine verbesserte Bedienung und Beobachtung des Prozesses bzw. der Prozessobjekte.

Beispielsweise ist ein Eingabefeld um die Option "Trigger Alarm" erweitert, wenn ein Operator mit dem Anlegen der Kurznachricht auch diesen Trigger setzt, wird ein entsprechender Erinnerungsalarm angestoßen.

Eine weitere Ausgestaltung des Systems sieht vor, dass die weiteren Alarmmeldungen mit den zugeordneten Kurznachrichten eine Referenz zu den Alarm-Instanzen aufweisen.

Da den Prozessobjekten die Alarm-Instanz zugeordnet ist, kann nun mit Vorteil aus der Meldefolgeanzeige mit Hilfe der Referenz in eine Detailansicht zu den Prozessobjekten geschaltet werden, es wird quasi ein Loop-in zu dem Prozessobjekt realisiert.

Weiterhin ist vorteilhaft vorgesehen, dass eine Meldungsliste als Archiv für die zugeordneten Kurznachrichten vorhanden ist. Es ist demnach nachzuvollziehen, wer und wann eine Bedienhandlung aufgrund einer Kurznachricht abgeschlossen wurde und der damit einhergehende Erinnerungs-Alarm abgeschlossen ist. Hier kommen insbesondere die Vorteile für einen Audit Trail einer Anlagenbedienung zum Tragen. Es ist quasi eine Nachvollziehbarkeit für kleine Kurznachrichten und Bedienhandlungen geschaffen worden.

Die Prozessobjekte weisen mit Vorteil einen Datenverbund auf und der Datenverbund hat neben anderen Datentypen die Referenz als ein Datenelement in seinem Aufbau vorhanden. Als Datenverbund im Sinne der Erfindung kann beispielsweise eine Struktur von Daten angesehen werden, wie z.B. eine Motor-Struktur mit den Datentypen Temperatur, Drehzahl, Bremswirkung, Leistung und zusätzlich nun nach den Datentyp Memo für eine Kurznachricht.

Mit Vorteil ist die Meldefolgeanzeige weiterhin mit einem Mittel zur Detailanzeige des der Kurznachricht zugeordneten Prozessobjektes unter Verwendung der Referenz ausgestaltet. Durch Betätigen der Detailanzeige kann beispielsweise in die Loop-in Funktion gewechselt werden.

Weiterhin ist die Meldefolgeanzeige ausgestaltet, die Kurznachricht als eine quittierpflichtige Alarmmeldung darzustellen und entsprechend ist ein Quittiermechanismus vorhanden.

Demnach ist mit dieser Erfindung ein Prozessüberwachungssystem und ein Verfahren bzw. eine Implementierung vorgestellt, anhand derer mit einen bestehenden Alarmmanagement Kurznachrichten von Prozessobjekten interagieren können und nun eine verbesserte Bedienung und Beobachtung möglich ist, da besonders wichtige Kurznachrichten bei Bedarf amnipräsent in Erscheinung treten können.

Ebenso betrifft die Erfindung ein Verfahren zum Betreiben eines Prozessüberwachungssystems, bei der zumindest eine erste Bedieneinheit mit einem Server Daten austauscht, der Server wird zur Überwachung einer Automatisierungsanlage mit einem Visualisierungsservice betrieben, welcher mit einem Variablenhaushalt für Prozesswerte die Prozesswerte auf ein Prozessabbild aktualisiert, weiterhin werden mit einem Alarmhaushalt und einer Alarmliste mit Alarmmeldungen mittels des Visualisierungsservices der zumindest ersten Bedieneinheit Prozesswerte und Alarmmeldungen bereitgestellt, wobei die erste Bedieneinheit bei Aufruf durch einen Benutzer in einem Ein-Ausgabefenster ein Prozessobjekt mit seinen Prozesswerten anzeigt, in der ersten Bedieneinheit wird eine Meldefolgeanzeige mit Alarmmeldungen aus der Alarmliste angezeigt.

Bei dem genannten Verfahren wird die eingangs genannte Aufgabe dadurch gelöst, dass das Ein-Ausgabefenster ein Eingabefeld für Kurznachrichten bereitstellt und über ein Aktivierungsmittel die Kurznachrichten aktiviert wird, dabei wird eine Verwaltungskomponente zur Verwaltung der Prozessobjekte derart betrieben, dass bei einer eingegebenen Kurznachricht und einem aktivierten Aktivierungsmittel für das dem Eingabefeld zugeordnete Prozessobjekt eine Alarm-Instanz angelegt wird und die zugeordnete Kurznachricht als weitere Alarmmeldung in der Alarmliste hinterlegt wird, wobei in der Meldefolgeanzeige die weiteren Alarmmeldungen aus der Alarmliste als Kurznachrichten angezeigt werden.

Es können nun Memos oder Notizen anhand der in dem Alarmsystem eingetragenen Kurznachrichten nicht übersehen werden, da ein durch diese Erfindung angestoßene Alarm aus einer Kurznachricht heraus auch in der Meldefolgeanzeige sichtbar gemacht wird. Erstellt ein Operator, wie beschrieben, eine Kurznachricht über das Eingabefenster (Face Plate) eines Prozessobjektes, so wird über eine dafür zuständige Softwarekomponente, beispielsweise die CSDL, ein dafür im Prozessabbild des Servers angelegter Alarm ausgelöst, insbesondere für jede Kurznachricht gilt, dass eine eigene aktive Instanz des Alarms angelegt wird. Vorteilhafterweise beinhaltet der Alarm selbst auch eine Referenz auf die betreffende Kurznachricht, so dass aus einer Meldefolgeanzeige heraus, auch ein Loop-in zur Kurznachrichtenansicht des betreffenden Prozessobjektes vorgenommen werden kann. Ein Operator einer anderen Operator-Station kann nun über die herkömmliche Meldefolgeanzeige erkennen, ob es dringliche Kurznachrichten für ihn gibt, die noch zu bearbeiten sind.

Demnach wird bei dem Verfahren mit Vorteil den weiteren Alarmmeldungen mit den zugeordneten Kurznachrichten eine Referenz zu den Alram-Instanzen zugeordnet.

Für eine bessere Nachvollziehbarkeit, insbesondere für ein Audit-Trail, wird bei dem Verfahren eine Meldungsliste als Archiv mit den zugeordneten Kurznachrichten gefüllt und fortlaufend abgespeichert.

Verfahrensgemäß ist es von Vorteil, dass die Prozessobjekte mit einem Datenverbund erstellt werden und dem Datenverbund neben anderen Datentypen die Referenz zugewiesen wird.

Für eine bessere Bedienbarkeit und eine spätere Detailansicht wird die Meldefolgeanzeige mit einem Mittel zur Detailanzeige des der Kurznachricht zugeordneten Prozessobjektes betrieben und dazu wird die Referenz für den Aufruf der Details verwendet.

Als besonders vorteilhaft wird angesehen, wenn die Meldefolgeanzeige die Kurznachricht als eine quittierpflichtige Alarmmeldung darstellt und entsprechend ein Quittiermechanismus für einen Benutzer bereitgestellt wird.

Die Erfindung wird anhand der Zeichnungen näher erläutert. Es zeigen
- FIG 1: ein Prozessüberwachungssystem mit einer angeschlossenen Automatisierungsanlage,
- FIG 2: ein Ein-Ausgabefenster mit Eingabefeld für eine Kurznachricht,
- FIG 3: ein Ein-Ausgabefenster mit Ansicht einer aktivierten Kurznachricht,
- FIG 4: ein Ein-Ausgabefenster mit Ansicht einer quittierten Kurznachricht und
- FIG 5: eine Meldefolgeanzeige mit eingebetteten Kurznachrichten.

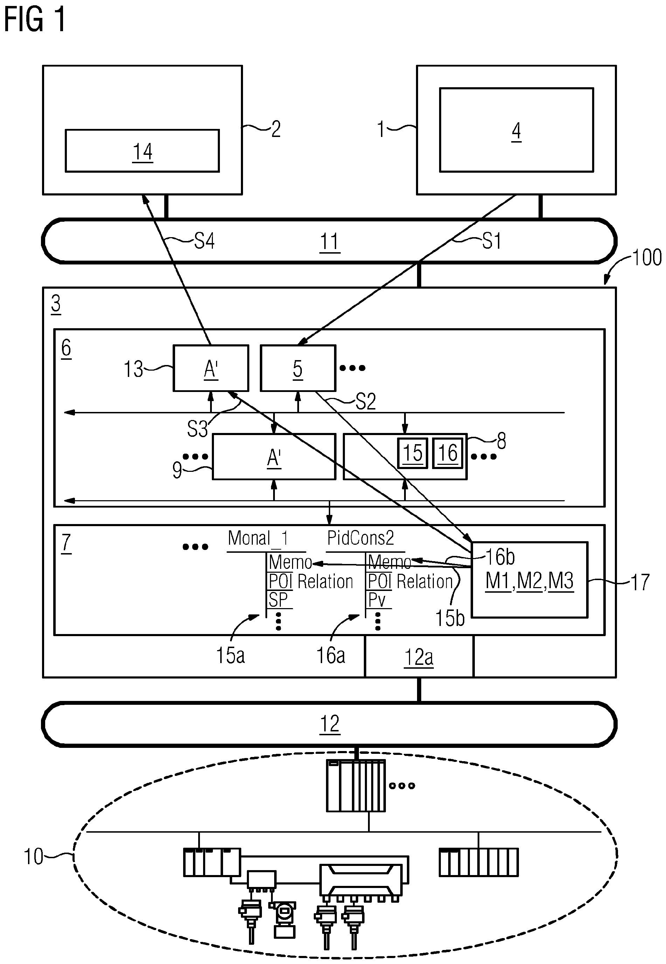

Gemäß FIG 1 ist ein Prozessüberwachungssystem 100 dargestellt. Das Prozessüberwachungssystem 100 ist über ein erstes Bussystem 11 an eine erste Bedieneinheit 1 und an eine zweite Bedieneinheit 2 angeschlossen. Über ein zweites Bussystem 12 ist das Prozessüberwachungssystem 100 an eine Automatisierungsanlage 10 angeschlossen. Die Automatisierungsanlage 10 weist beispielsweise Automatisierungsgeräte, dezentrale Peripherie und Servomotoren auf.

Ein Server 3 des Prozessüberwachungssystems 100 bildet einen Kern des Systems, wobei der Server 3 zur Überwachung der Automatisierungsanlage 10 einen Visualisierungsservice 6 aufweist, welcher mit einem Variablenhaushalt 8 für Prozesswerte PV aus einem Prozessabbild 7 ausgestaltet ist. Der Visualierungsservice 6 ist ausgestaltet, die zumindest erste Bedieneinheit 1 mit Prozesswerten PV und Alarmmeldungen A1 zu versorgen, wobei weiterhin die erste Bedieneinheit 1 ausgestaltet ist, in einem Ein-Ausgabefenster 4 ein Prozessobjekt 15,16 mit seinen Prozesswerten PV anzuzeigen.

Die zweite Bedieneinheit 2 ist ausgestaltet, eine Meldefolgeanzeige 14 anzuzeigen, wobei ebenfalls die erste Bedieneinheit 1 auch ausgestaltet ist, die Meldefolgeanzeige 14 anzuzeigen, aber in FIG 1 bei der ersten Bedieneinheit 1 das Ein-Ausgabefenster und bei der zweiten Bedieneinheit 2 die Meldefolgeanzeige 14 abgebildet ist.

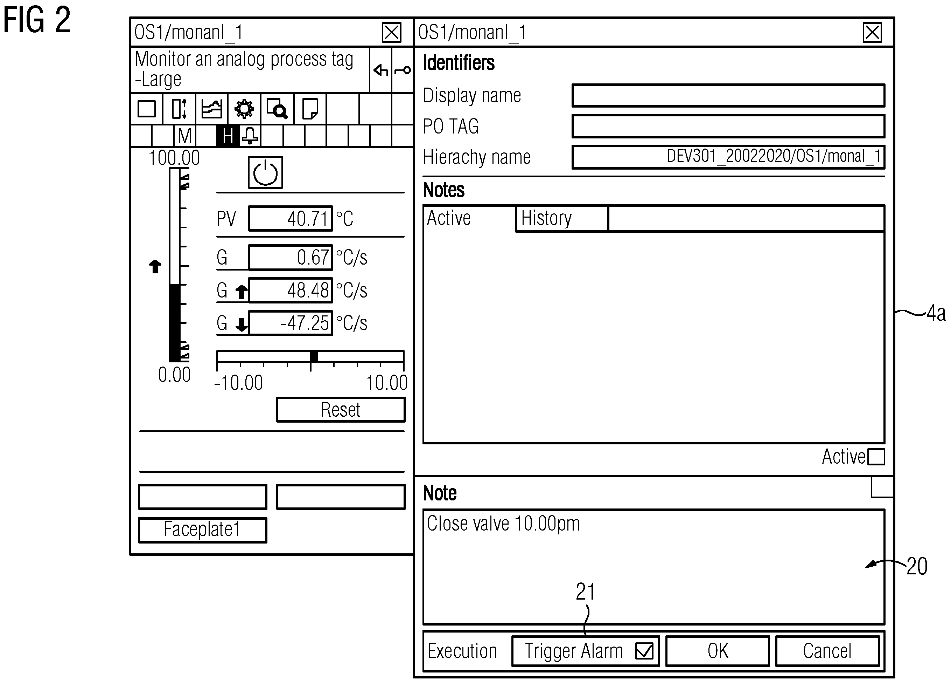

Das Ein-Ausgabefenster 4, siehe auch in FIG 2, 3, 4, die entsprechenden Ein-Ausgabefenster 4a,4b,4c, ist mit einem Eingabefeld 20 für Kurznachrichten M1,M2,M3 ausgestaltet und weiterhin weist es ein Aktivierungsmittel 21 auf.

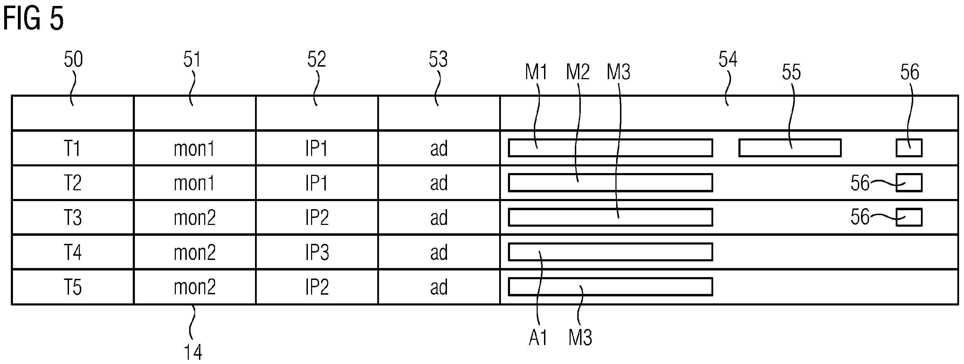

Eine Verwaltungskomponente 5 zur Verwaltung der Prozessobjekte 15,16 ist ausgestaltet, bei einer eingegebenen Kurznachricht M1,M2,M3 und einem aktivierten Aktivierungsmittel 21 für das dem Eingabefeld 20 (siehe FIG 2) zugeordneten Prozessobjekt 15,16 eine Alarm-Instanz 15a,16a anzulegen und die zugeordnete Kurznachricht M1,M2,M3 als weitere Alarmmeldung A' in der Alarmliste 13 zu hinterlegen. Die Meldefolgeanzeige 14 ist ausgestaltet, die erweiterten Alarmmeldung A' aus der Alarmliste 13 als Kurznachrichten M1,M2,M3 anzuzeigen (siehe hierzu FIG 5).

Verfahrensgemäß ist also vorgesehen, dass zum Betrieb des Prozessüberwachungssystems 100 zumindest die erste Bedieneinheit 1 mit dem Server 3 Daten austauscht, der Server 3 wird zur Überwachung der Automatisierungsanlage 10 mit dem Visualisierungsservice 6 betrieben. Der Visualisierungsservice 6 beinhaltet den Variablenhaushalt 8 für die Prozesswerte, die Prozesswerte werden aus dem Prozessabbild 7 aktualisiert. Aus dem Alarmhaushalt 9 und der Alarmliste 13 werden Alarmmeldungen A1 mittels des Visualisierungsservice 6 der zumindest ersten Bedieneinheit 1 bereitgestellt. Ein Benutzer kann an der ersten Bedieneinheit 1 bei Aufruf des Ein-Ausgabefensters 4 ein Prozessobjekt 15,16 mit seinen Prozesswerten PV anzeigen lassen.

Verfahrensgemäß wird nun über das erste Eingabefenster 4 ein Eingabefeld 20 für Kurznachrichten M1,M2,M3 bereitgestellt und über ein Aktivierungsmittel 21 (siehe FIG 2) werden die Kurznachrichten M1,M2 aktiviert, dabei wird in einem ersten Schritt S1 eine Verwaltungskomponente 15 zur Verwaltung der Prozessobjekte 15,16 derart betrieben, dass bei einer eingegebenen Kurznachricht M1 und einem aktivierten Aktivierungsmittel 21 für das dem Eingabefeld 20 zugeordneten Prozessobjekt 15, 16 eine Alarm-Instanz 15a,15b angelegt wird. In einem zweiten Schritt S2 wird eine Meldungsliste 17 mit den Kurznachrichten M1,M2,M3 gefüllt. In einem dritten Schritt S3 werden die zugeordneten Kurznachrichten M1,M2,M3 als weitere Alarmmeldungen A' in der Alarmliste 13 hinterlegt, wobei in der Meldefolgeanzeige 14 die weiteren Alarmmeldungen A' aus der Alarmliste 13 in einem vierten Schritt S4 als Kurznachrichten M1,M2,M3 angezeigt werden.

Kommunikationstechnisch sind die erste Bedieneinheit 1 und die zweite Bedieneinheit 2 über ein erstes Bussystem 11 an den Server 3 angeschlossen, die Automatisierungsanlage 10 ist über ein zweites Bussystem 12 ebenfalls an den Server 3 angeschlossen, wobei eine Prozessschnittstelle 12a für die Aufbereitung der Prozesswerte PV im Server 3 integriert ist.

Die FIG 2 zeigt ein Ein-Ausgabefenster 4a mit Eingabefeld für eine Kurznachricht M1,M2,M3. Das Eingabefeld 20 für eine Kurznachricht M1,M2,M3 verfügt in einer Bedienleiste zusätzlich über ein Aktivierungsmittel 21. Dieses Aktivierungsmittel 21 ist als eine Checkbox "Trigger Alarm" ausgestaltet.

Die Figuren 2, 3 und 4 zeigen demnach ein Ausführungsbeispiel zur Veranschaulichung der Anwendung und des Nutzens des durch diese Erfindung eingeführten mit einem Alarmmanagement interagierenden Kurznachrichten-Dienst von Prozessobjekten für eine verbesserte Bedienung und Beobachtung für die Benutzer bzw. Operatoren der Bedieneinheiten. Das Ein-Ausgabefenster 4a mit Eingabefeld 20 für eine Kurznachricht M1,M2,M3 ist gemäß FIG 2 als ein Face Plate ausgestaltet. Aus diesem Face Plate heraus, kann das Eingabefeld 20 geöffnet werden und es ermöglicht einen Benutzer Kurznachrichten für das entsprechende Prozessobjekt 15,16 zu hinterlegen. Das Eingabefeld 20 weist als Option das Aktivierungsmittel 21 mit einer Checkbox "Trigger Alarm" auf, wenn der Benutzer mit dem Anlegen der Kurznachricht M1,M2,M3 auch einen entsprechenden Erinnerungsalarm anstoßen möchte, falls beispielsweise zu einer bestimmten Uhrzeit ein Ventil wieder von Hand geschlossen werden muss, so kann er dies in das Eingabefeld 20 als wichtige Kurznachricht eingeben.

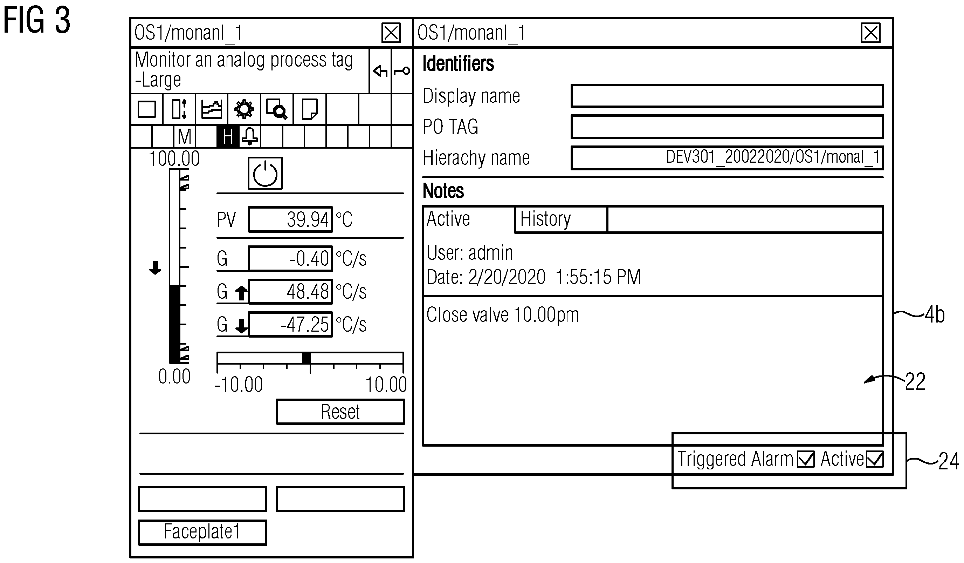

Die FIG 3 zeigt ein Ein-Ausgabefenster 4b mit einer Ansicht einer aktivierten Kurznachricht M1,M2,M3. In einem Statusfeld wird angezeigt, dass ein Benutzer "Admin" zur Uhrzeit 1:55pm am 20.02.2020 die Kurznachricht M1 = "Close valve 10.00pm" eingegeben hat. Ein Rückmeldemittel 24 zeigt an, dass es gewünscht ist, das diese Kurznachricht als Alarmmeldung später in einer Meldefolgeanzeige 14 auftaucht und zusätzlich aktiviert ist.

Wie dargestellt kann ein Benutzer nun erkennen, dass es sich hierbei um ein noch aktives Memo bzw. eine aktive Kurznachricht mit einem aktivierten Erinnerungsalarm handelt. Da es nach dem Stand der Technik zuvor nachteilig war, dass Einträge von Memos bzw. Kurznachrichten übersehen werden konnten, ist durch diese Erfindung ein angestoßener Alarm aus einer Kurznachricht heraus auch in der Meldefolgenzeige 14 sichtbar und zusätzlich auf quittierpflichtig, die Kurznachricht kann demnach nicht mehr verloren gehen.

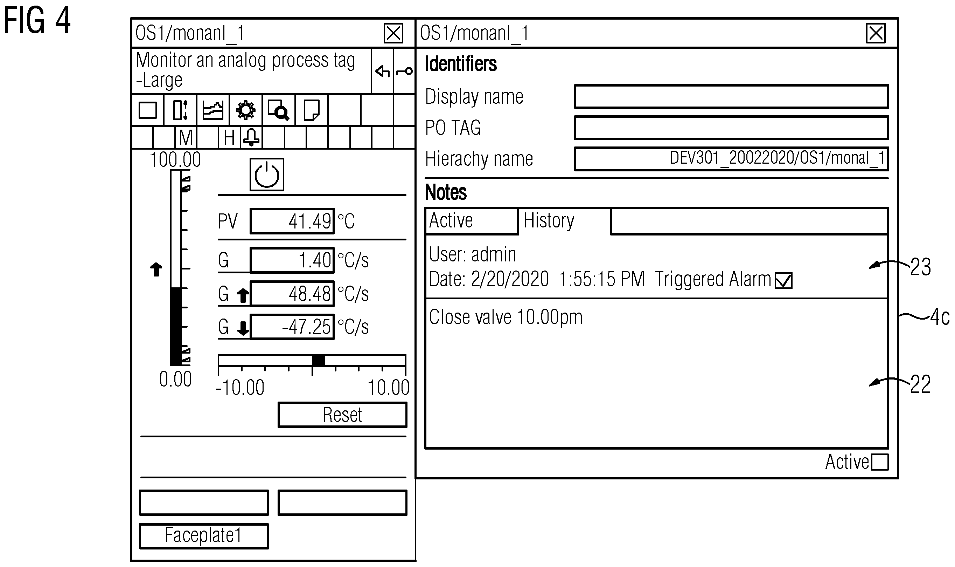

Mit der FIG 4 ist ein Ein-Ausgabefenster 4c mit Ansicht einer quittierten Kurznachricht M1 dargestellt. In dem Statusfeld 22 wird eine Quittung 23 angezeigt. Demnach wird in dem Ein-Ausgabefenster 4c mit der Ansicht einer quittierten Kurznachricht angezeigt, dass eine Bedienhandlung abgeschlossen und bestätigt wurde. Nach Abschluss der Bedienhandlung, hier im Beispiel "Close valve 10.00pm" wird die Kurznachricht in eine Historie aufgenommen, der man ebenfalls entnehmen kann, dass es sich bei der Kurznachricht um einen angestoßenen Erinnerungsalarm-Ereignis handelt, welches vorteilhaft ist für ein späteres Audit Trail.

Die FIG 5 zeigt eine Meldefolgeanzeige 14, wobei die Meldefolgeanzeige 14 tabellarisch aufgebaut ist. In einer ersten Spalte wird ein Zeitstempel 50, in einer zweiten Spalte wird ein Name des Prozessobjektes 51, in einer dritten Spalte wird eine Host/IP-Adresse 52, in einer vierten Spalte wird ein U-ser 53, in einer fünften Spalte wird ein Meldetext 54 angezeigt. In der fünften Spalte für den Meldetext 54 wird zusätzlich eine Zusatzanzeige 55 für einen Trigger Alarm und ein Mittel zur Detailanzeige 56 dargestellt.

Beim ersten Zeitstempel T1 trat eine erste Kurznachricht M1 auf, bei einem zweiten Zeitstempel T2 trat eine Kurznachricht M2 auf, bei einem dritten Zeitstempel T3 trat eine dritte Kurznachricht M3 auf. Bei einem vierten Zeitstempel T4 trat ein "normaler" Alarm A1 auf. Bei einem fünften Zeitstempel T5 trat das Ereignis auf, dass beispielsweise die dritte Kurznachricht M3 von dem Prozessobjekt "monane 2" quittiert wurde.

Erfindungsgemäß zeigt nun die FIG 5 die Meldefolgeanzeige 14 in der durch die Kurznachrichten M1,M2,M3 ausgelösten Erinnerungsalarme zu sehen sind. Wenn ein Alarm aktiv und noch nicht quittiert ist, wird das durch einen Farbumschlag in einer Alarmzeile kenntlich gemacht. Der für die Bedienhandlung zuständige Operator wird somit kontinuierlich an die ausstehende Bedienung der Anweisung, beispielsweise der ersten Kurznachricht M1 erinnert, bis er die Ausführung der Bedienhandlung betreffend der ersten Kurznachricht M1 quittiert hat, oder im Eingabefeld für Kurznachrichten 20 selbst die "Trigger Alarm" Option zurücknimmt oder das Memo auf inaktiv stellt.

## Patentansprüche

1. Prozessüberwachungssystem (100) mit zumindest einer ersten Bedieneinheit (1) und einem mit der Bedieneinheit (1) in Verbindung stehenden Server (3), der Server (3) weist zur Überwachung einer Automatisierungsanlage (10) einen Visualisierungsservice (6) auf, welcher mit einem Variablenhaushalt (8) für Prozesswerte (PV) aus einem Prozessabbild (7) ausgestaltet ist, weiterhin ausgestaltet mit einem Alarmhaushalt (9) und einer Alarmliste (13) mit Alarmmeldungen (A1), der Visualisierungsservice (6) ist ausgestaltet die zumindest erste Bedieneinheit (1) mit Prozesswerten (PV) und Alarmmeldungen (A1) zu versorgen, wobei die erste Bedieneinheit (1) ausgestaltet ist, in einem Ein-Ausgabefenster (4) ein Prozessobjekt (15,16) mit seinem Prozesswerten (PV) anzuzeigen, weiterhin ist die erste Bedieneinheit (1) ausgestaltet, eine Meldefolgeanzeige (14) mit Alarmmeldungen (A1) aus der Alarmliste (13) anzuzeigen, **dadurch gekennzeichnet, dass** das Ein-Ausgabefenster (4) mit einem Eingabefeld (20) für Kurznachrichten (M1,M2,M3) ausgestaltet ist und weiterhin ein Aktivierungsmittel (21) aufweist, wobei eine Verwaltungskomponente (5) zur Verwaltung der Prozessobjekte (15,16) vorhanden ist und diese ausgestaltet ist, bei einer eingegebenen Kurznachricht (M1,M2,M3) und einem aktivierten Aktivierungsmittel (21) für das dem Eingabefeld (20) zugeordnete Prozessobjekt (15,16) eine Alarm-Instanz (15a,16a) anzulegen und die zugeordnete Kurznachricht (M1,M2,M3) als weitere Alarmmeldung (A') in der Alarmliste (13) zu hinterlegen, wobei die Meldefolgeanzeige (14) dahingehend erweitert ist, die weiteren Alarmmeldungen (A') aus der Alarmliste (13) als Kurznachrichten (M1,M2,M3) anzuzeigen.

2. Prozessüberwachungssystem (100) nach Anspruch 1, wobei die weiteren Alarmmeldungen (A') mit den zugeordneten Kurznachrichten (M1, M2, M3) eine Referenz (15b,16b) zu den Alarm-Instanzen (15a,16a) aufweisen.

3. Prozessüberwachungssystem (100) nach Anspruch 1 oder 2, wobei eine Meldungsliste (17) als Archiv für die zugeordneten Kurznachrichten (M1, M2, M3) vorhanden ist.

4. Prozessüberwachungssystem (100) nach Anspruch 2 oder 3, wobei die Prozessobjekte (15,16) einen Datenverbund (DV1, DV2) aufweisen und der Datenverbund (DV1, DV2) neben anderen Datentypen die Referenz (15b,16b) aufweist.

5. Prozessüberwachungssystem (100) nach einem der Ansprüche 2 bis 4, wobei die Meldefolgeanzeige (14) weiterhin mit einem Mittel (56) zur Detailanzeige des der Kurznachricht (M1, M2, M3) zugeordnetem Prozessobjekt (15,16) unter Verwendung der Referenz (15b,16b) ausgestaltet ist.

6. Prozessüberwachungssystem (100) nach einem der Ansprüche 1 bis 5, wobei die Meldefolgeanzeige (14) ausgestaltet ist die Kurznachricht (M1, M2, M3) als eine quittierpflichtige Alarmmeldung darzustellen und entsprechend ein Quittiermechanismus vorhanden ist.

7. Verfahren zum Betreiben eines Prozessüberwachungssystems (100), wobei zumindest eine erste Bedieneinheit (1) mit einem Server (3) Daten austauscht, der Server (3) wird zur Überwachung einer Automatisierungsanlage (10) mit einen Visualisierungsservice (6) betrieben, welcher mit einem Variablenhaushalt (8) für Prozesswerte (PV) die Prozesswerte (PV) aus einem Prozessabbild (7) aktualisiert, weiterhin werden mit einem Alarmhaushalt (9) und einer Alarmliste (13) mit Alarmmeldungen (A1) mittels des Visualisierungsservice (6) der zumindest ersten Bedieneinheit (1) Prozesswerte (PV) und Alarmmeldungen (A1) bereitzustellen, wobei die erste Bedieneinheit (1) bei Aufruf durch einen Benutzer in einem Ein-Ausgabefenster (4) ein Prozessobjekt (15,16) mit seinem Prozesswerten (PV) anzeigt, in der ersten Bedieneinheit (1) wird eine Meldefolgeanzeige (14) mit Alarmmeldungen (A1) aus der Alarmliste (13) angezeigt,
**dadurch gekennzeichnet, dass** das Ein-Ausgabefenster (4) ein Eingabefeld (20) für Kurznachrichten (M1,M2,M3) bereitstellt und über ein Aktivierungsmittel (21) die Kurznachricht (M1,M2,M3) aktiviert wird, dabei wird eine Verwaltungskomponente (15) zur Verwaltung der Prozessobjekte (15,16) derart betrieben, dass bei einer eingegebenen Kurznachricht (M1,M2,M3) und einem aktivierten Aktivierungsmittel (21) für das dem Eingabefeld (20) zugeordnete Prozessobjekt (15,16) eine Alarm-Instanz (15a,16a) angelegt wird und die zugeordnete Kurznachricht (M1,M2,M3) als weitere Alarmmeldung (A') in der Alarmliste (13) hinterlegt wird, wobei in der Meldefolgeanzeige (14) die weiteren Alarmmeldungen (A') aus der Alarmliste (13) als Kurznachrichten (M1,M2,M3) angezeigt werden.

8. Verfahren (100) nach Anspruch 7, wobei den weiteren Alarmmeldungen (A') mit den zugeordneten Kurznachrichten (M1, M2, M3) eine Referenz (15b,16b) zu den Alarm-Instanzen (15a,16a) zugeordnet wird.

9. Verfahren (100) nach Anspruch 7 oder 8, wobei eine Meldungsliste (17) als Archiv mit den zugeordneten Kurznachrichten (M1, M2, M3) gefüllt wird.

10. Verfahren (100) nach Anspruch 8 oder 9, wobei die Prozessobjekte (15,16) mit einem Datenverbund (DV1, DV2) erstellt werden und dem Datenverbund (DV1, DV2) neben anderen Datentypen die Referenz (15b,16b) zugewiesen wird.

11. Verfahren nach einem der Ansprüche 7 bis 10, wobei die Meldefolgeanzeige (14) mit einem Mittel (56) zur Detailanzeige des der Kurznachricht (M1, M2, M3) zugeordnetem Prozessobjekt (15,16) betrieben wird und dazu die Referenz (15b,16b) für den Aufruf der Details verwendet wird.

12. Verfahren nach einem der Ansprüche 7 bis 11, wobei die Meldefolgeanzeige (14) die Kurznachricht (M1, M2, M3) als eine quittierpflichtige Alarmmeldung darstellt und entsprechend ein Quittiermechanismus für einen Benutzer bereitstellt.

## Claims

1. Process monitoring system (100) with at least one first control unit (1) and a server (3) connected to the control unit (1) , the server (3) has a visualisation service (6) for monitoring an automation system (10), said visualisation service being configured with a variable household (8) for process values (PV) from a process image (7), further configured with an alarm household (9) and an alarm list (13) with alarm messages (A1), the visualisation service (6) is configured to supply the at least first control unit (1) with process values (PV) and alarm messages (A1), wherein the first control unit (1) is configured to indicate a process object (15, 16) with its process values (PV) in an input/output window (4), furthermore the first control unit (1) is configured to indicate a message sequence display (14) with alarm messages (A1) from the alarm list (13),
**characterised in that** the input/output window (4) is configured with an input field (20) for short messages (M1, M2, M3) and furthermore has an activation means (21), wherein a management component (5) for managing the process objects (15, 16) is available and this is configured to create an alarm instance (15a, 16a) for the process object (15, 16) assigned to the input field (20) when a short message (M1, M2, M3) is input and an activation means (21) is activated, and to store the assigned short message (M1, M2, M3) as a further alarm message (A') in the alarm list (13), wherein the message sequence display (14) is extended to indicate the further alarm messages (A') from the alarm list (13) as short messages (M1, M2, M3).

2. Process monitoring system (100) according to claim 1, wherein the further alarm messages (A') with the assigned short messages (M1, M2, M3) have a reference (15b, 16b) to the alarm instances (15a, 16a).

3. Process monitoring system (100) according to claim 1 or 2, wherein a message list (17) is present as an archive for the assigned short messages (M1, M2, M3).

4. Process monitoring system (100) according to claim 2 or 3, wherein the process objects (15, 16) have a data network (DV1, DV2) and the data network (DV1, DV2) in addition to other data types has the reference (15b, 16b).

5. Process monitoring system (100) according to one of claims 2 to 4, wherein the message sequence display (14) is further configured with means (56) for detailed display of the process object (15, 16) assigned to the short message (M1, M2, M3) using the reference (15b, 16b).

6. Process monitoring system (100) according to one of claims 1 to 5, wherein the message sequence display (14) is configured to display the short message (M1, M2, M3) as an acknowledgement-requiring alarm message and accordingly an acknowledgement mechanism is available.

7. Method for operating a process monitoring system (100), wherein at least one first control unit (1) exchanges data with a server (3), the server (3) is operated in order to monitor an automation installation (10) with a visualisation service (6) which updates the process values (PV) from a process image (7) with a variable household (8) for process values (PV), furthermore, process values (PV) and alarm messages (A1) are to be provided with an alarm household (9) and an alarm list (13) with alarm messages (A1) by means of the visualisation service (6) of the at least first control unit (1), wherein the first control unit (1) indicates a process object (15, 16) with its process values (PV) when called up by a user in an input/output window (4), in the first control unit (1) a message sequence display (14) is indicated with alarm messages (A1) from the alarm list (13), **characterised in that** the input/output window (4) provides an input field (20) for short messages (M1, M2, M3) and the short message (M1, M2, M3) is activated by way of an activation means (21), here a management component (15) for managing the process objects (15, 16) is operated so that when a short message (M1, M2, M3) is input and an activation means (21) is activated for the process object (15, 16) assigned to the input field (20), an alarm instance (15a, 16a) is created and the assigned short message (M1, M2, M3) is stored in the alarm list (13) as a further alarm message (A'), wherein the further alarm messages (A') from the alarm list (13) are indicated as short messages (M1, M2, M3) in the message sequence display (14) .

8. Method (100) according to claim 7, wherein a reference (15b, 16b) relating to the alarm instances (15a, 16b) is assigned to the further alarm messages (A') with the assigned short messages (M1, M2, M3).

9. Method (100) according to claim 7 or 8, wherein a message list (17) as an archive is filled with the assigned short messages (M1, M2, M3).

10. Method (100) according to claim 8 or 9, wherein the process objects (15, 16) are produced with a data network (DV1, DV2) and the reference (15b, 16b) is assigned to the data network (DV1, DV2) in addition to other data types.

11. Method according to one of claims 7 to 10, wherein the message sequence display (14) is operated with a means (56) for the detailed display of the process object (15, 16) assigned to the short message (M1, M2, M3) and to this end the reference (15b, 16b) is used to call up the details.

12. Method according to one of claims 7 to 11, wherein the message sequence display (14) represents the short message (M1, M2, M3) as an acknowledgment-requiring alarm message and accordingly an acknowledgement mechanism is provided for a user.

## Revendications

1. Système (100) de contrôle de processus comprenant au moins une première unité (1) de commande et un serveur (3) en liaison avec l'unité (1) de commande,
le serveur (3) a, pour le contrôle d'une installation (10) d'automatisation, un service (6) de visualisation, lequel est conformé avec un maintien (8) de variables pour des valeurs (PV) de processus à partir d'une reproduction (7) de processus, conformé en outre avec un maintien (9) d'alerte et une liste (13) d'alertes ayant des messages (A1) d'alerte, le service (6) de visualisation est conformé pour alimenter la au moins première unité (1) de commande en valeurs (PV) de processus et en messages (A1) d'alerte, dans lequel la première unité (1) de commande est conformée pour indiquer, dans une fenêtre (4) d'entrée-sortie, un objet (15, 16) de processus par ses valeurs (PV) de processus, en outre la première unité (1) de commande est conformée pour indiquer une indication (14) de suivi d'annonce par des messages (A1) d'alerte de la liste (13) d'alertes,
**caractérisé en ce que**
la fenêtre (4) d'entrée-sortie est conformée avec un champ (20) d'entrée pour des nouvelles (M1, M2, M3) courtes et a en outre un moyen (21) d'activation, dans lequel il y a un composant (5) de gestion pour la gestion des objets (15, 16) de processus et celui-là est conformé pour, lorsqu'une nouvelle (M1, M2, M3) courte est entrée et un moyen (21) d'activation activé, appliquer à l'objet (15, 16) de processus associé au champ (20) d'entrée une instance (15a, 16a) d'alerte et mettre en mémoire la nouvelle (M1, M2, M3) courte associée comme autre message (A') d'alerte dans la liste (13) d'alertes, l'indication (14) de suivi de message étant ainsi agrandie, les autres messages (A') d'alerte de la liste (13) d'alertes étant indiquées comme nouvelles (M1, M2, M3) courtes.

2. Système (100) de contrôle de processus suivant la revendication 1, dans lequel les autre messages (A') d'alerte ont, avec les nouvelles (M1, M2, M3) courtes associées, une référence (15b, 16b) aux instances (15a, 16a) d'alerte.

3. Système (100) de contrôle de processus suivant la revendication 1 ou 2, dans lequel il y a une liste (17) de messages comme archive pour les nouvelles (M1, M2, M3) courtes associées.

4. Système (100) de contrôle de processus suivant la revendication 2 ou 3, dans lequel les objets (15, 16) de processus ont une liaison (DV1, DV2) de données et la liaison (DV1, DV2) a, à côté d'autre types de données, la référence (15b, 16b).

5. Système (100) de contrôle de processus suivant l'une des revendications 2 à 4, dans lequel l'indication (14) de suivi d'annonce est conformé en outre avec un moyen (56) d'indication détaillée de l'objet (15, 16) de processus associé à la nouvelle (M1, M2, M3) courte en utilisant la référence (15b, 16b).

6. Système (100) de contrôle de processus suivant l'une des revendications 1 à 5, dans lequel l'indication (14) de suivi d'annonce est conformé pour représenter la nouvelle (M1, M2, M3) courte sous la forme d'un message d'alerte, dont il peut être accusé réception et il y a, d'une manière correspondante, un mécanisme d'accusé de réception.

7. Procédé pour faire fonctionner un système (100) de contrôle de processus, dans lequel au moins une première unité (1) de commande échange des données avec un serveur (3), on fait fonctionner le serveur (3) pour le contrôle d'une installation (10) d'automatisation par un service (6) de visualisation, qui met à jour, par un maintien (8) de variables pour des valeurs (PV) de processus, les valeurs (PV) de processus d'une reproduction (7) de processus, en outre, par un maintien (9) d'alerte et une liste (13) d'alertes ayant des messages (A1) d'alerte, il est mis à disposition au moyen du service (6) de visualisation de la au moins une première unité (1) de commande des valeurs (PV) de processus et des messages (A1) d'alertes, dans lequel la première unité (1) de commande, sur demande d'un utilisateur, indique, dans une fenêtre (4) d'entrée-sortie, un objet (15, 16) de processus par ses valeurs (PV) de processus, dans la première unité (1) de commande, une indication (14) de suivi d'annonce est indiquée par des messages (A1) d'alerte de la liste (13) d'alertes, **caractérisé en ce que** la fenêtre (4) d'entrée-sortie met à disposition un champ (20) d'entrée pour des nouvelles (M1, M2, M3) courtes et on active la nouvelle (M1, M2, M3) courte par un moyen (21) d'activation, on fait fonctionner un composant (15) de gestion pour la gestion des objets (15, 16) de processus, de manière à ce que, lorsque une nouvelle (M1, M2, M3) courte est entrée et un moyen (21) d'activation activé, on applique à l'objet (15, 16) de processus associé au champ (20) d'entrée une instance (15a, 16a) d'alerte et on met en mémoire la nouvelle (M1, M2, M3) courte associée comme autre message (A') d'alerte dans la liste (13) d'alertes, dans lequel on indique, dans l'indication (14) de suivi d'annonce, les autres messages (A') d'alerte de la liste (13) d'alertes comme nouvelles (M1, M2, M3) courtes.

8. Procédé (100) suivant la revendication 7, dans lequel on associe, aux autres messages (A') d'alerte ayant les nouvelles (M1, M2, M3) courtes associées, une référence (15b, 16b) aux instances (15a, 16a) d'alerte.

9. Procédé (100) suivant la revendication 7 ou 8, dans lequel on remplit une liste (17) de messages comme archive des nouvelles (M1, M2, M3) courtes associées.

10. Procédé (100) suivant la revendication 8 ou 9, dans lequel on établit les objets (15, 16) de processus avec une liaison (DV1, DV2) de données et on affecte à la liaison (DV1, DV2) de données, à côté d'autres types de données, la référence (15b, 16b).

11. Procédé suivant l'une des revendications 7 à 10, dans lequel on fait fonctionner l'indication (14) de suivi d'annonce avec un moyen (56) d'indication détaillée de l'objet (15, 16) de processus associé à la nouvelle (M1, M2, M3) courte et on utilise, à cet effet, la référence (15b, 16b) pour l'appel des détails.

12. Procédé suivant l'une des revendications 7 à 11, dans lequel l'indication (14) de suivi d'annonce représente la nouvelle (M1, M2, M3) courte comme un message d'alerte, dont on peut accuser réception et on dispose en conséquence d'un mécanisme d'accusé de réception pour un utilisateur.
